# EUROPÄISCHE PATENTSCHRIFT

(11) **EP 0 900 719 B1**
(45) Veröffentlichungstag und Bekanntmachung des Hinweises auf die Patenterteilung: **09.07.2003**
(21) Anmeldenummer: 98115702.7
(22) Anmeldetag: 20.08.1998
(51) Int. Cl.: B62D 51/00

(54) **Mitgehflurförderzeug mit Deichsel**
Pedestrian truck with drawbar
Engin de manutention avec timon pour conducteur marchant

(30) Priorität: 03.09.1997 DE 19738586
(43) Veröffentlichungstag der Anmeldung: 10.03.1999
(73) Patentinhaber: Jungheinrich Aktiengesellschaft, 22047 Hamburg (DE)
(72) Erfinder: Eggert, Nikolaus, 22589 Hamburg (DE); Kube, Matthias, 35745 Herborn-Schönbach (DE); Baginski, Ralf, 21398 Neetze (DE); Nissen, Nis-Georg, 24558 Henstedt-Ulzburg (DE); Mänken, Frank Dr., 22846 Norderstedt (DE)
(74) Vertreter: Patentanwälte Hauck, Graalfs, Wehnert, Döring, Siemons, Schildberg

(56) Entgegenhaltungen:
- DE-A- 2 319 618
- DE-A- 3 716 375
- DE-A- 19 614 411
- DE-U- 9 311 075

## Beschreibung

Die Erfindung bezieht sich auf ein mit einem Antriebsmotor und einer Deichsel nach dem Patentanspruch 1.

Aus DE 12 39 573 A ist ein Mitgehflurförderzeug mit Lenkdeichsel bekannt geworden, das um eine horizontale Achse an einem Lenkschemel angelenkt ist, der seinerseits um eine vertikale Achse schwenkbar gelagert ist. Aus DE 27 51 333 A ist ein Mitgehflurförderzeug bekannt, bei dem die Lenkdeichsel am oberen Ende einer Lenkwelle angebracht ist, die sich durch das Gehäuse des Antriebsteils vertikal nach unten erstreckt. Bei beiden Flurförderzeugen ist am Deichselkopf ein Fahrschalter vorgesehen, dessen Betätigung sowohl die Fahrtrichtung als auch die Fahrgeschwindigkeit bestimmt.

Aus DE 37 16 375 A ist ein deichselgeführtes motorangetriebenes Flurförderzeug benannt, bei dem die Deichsel im Bereich des Handgriffs zur Steuerung des Antriebsmotors ein willkürlich betätigbares Schalterbetätigungsorgan aufweist. Zu diesem Zweck ist der Handgriff verschieblich geführt, wobei die Bewegung von einem geeigneten Schalter erfaßt wird, der die Fahrtrichtung des Fahrzeugs vorgibt.

Bei dieser Vorkehrung soll verhindert werden, daß beim Aufnehmen der Deichsel aus der abgesenkten Lage oder beim Absenken aus einer hochgeklappten Lage die Betätigungsorgane für den Fahrantrieb beim Ergreifen des Handgriffs ungewollt betätigt werden und den Fahrantrieb einschalten.

Aus DE 24 43 375 A ist ein Flurförderzeug bekannt geworden, bei dem der obere Teil einer Deichsel teleskopisch bezüglich des anderen Deichselteils angeordnet ist. Eine Federanordnung sorgt dafür, daß der obere Deichselteil in einer Neutralstellung gehalten ist. Bei der Verstellung des oberen Deichselteils führt dieses auch eine Drehbewegung aus, um der Bedienungsperson die Verstellung spürbar zu machen. Es sind Schalter vorgesehen, welche bei einer Verstellung des oberen Deichselteils betätigt werden, um die Antriebsgeschwindigkeit des Flurförderzeugs zu ändern, wenn die Verstellung einen vorgegebenen Wert erreicht hat. Die Steuerung der Fahrgeschwindigkeit über den oberen Deichselteil hat zum einen Sicherheitsaspekt. Wird der obere Deichselteil losgelassen, gelangt er automatisch in die Neutralstellung, so daß der Antrieb ausgeschaltet wird. Bei einem Auffahren etwa auf die Bedienungsperson erfolgt automatisch eine Umschaltung, so daß es eines speziellen Auffahrschalters nicht bedarf. Zum anderen wird ein besonderer Fahrschalter nicht benötigt.

Aus DE 196 14 411 A ist für ein Mitgehflurförderzeug gemäß dem Oberbegriff des Anspruchs 1 bekannt geworden, an einer Handhabe zum Bewegen des Flurförderzeugs per manueller Kraft einen Kraftdetektor anzukoppeln und nach Maßgabe der Signale des Kraftdetektors den Fahrantrieb zu steuern. Insbesondere sind ein linker und ein rechter Kraftdetektor vorgesehen zur Steuerung eines linken und eines rechten Antriebsmotors für ein linkes und rechtes Antriebsrad. Ferner ist ein Geschwindigkeitsdetektor vorgesehen, der ein Signal auf die Steuervorrichtung gibt, welche die Signale von den Kraftdetektoren in Steuersignale für die Antriebsmotoren umsetzt.

Aus DE 23 19 618 ist ein Flurförderzeug mit Deichsel für den automatischen und/oder Handbetrieb bekannt geworden, bei dem im Deichselkopf quer zur Deichselachse verschiebbare Handgriffe vorgesehen sind, welche wegabhängige Signale erzeugen für eine Lenkunterstützung. Die Verschiebung des Griffes erfolgt gegen eine Feder.

Der Erfindung liegt die Aufgabe zugrunde, ein von einem Motor angetriebenes Mitgehflurförderzeug mit Deichsel zu schaffen, bei dem dem Bediener ein "direktes" Gefühl für das Flurförderzeug vermittelt wird ohne störende Bedienung eines Fahrschalters.

Diese Aufgabe wird gelöst durch die Merkmale des Patentanspruchs 1.

Die Erfindung berücksichtigt den Sachverhalt, daß der Drehweg eines sonst üblicherweise verwendeten Fahrschalters sich in Abhängigkeit vom Kippweg der Deichsel ändert. Bei der Bedienung des Flurförderzeugs muß der Fahrer ständig die gewünschte Leistungsanforderung in eine Drehbewegung der Hand umsetzen. Dies ist in besonders kritischen Fahrsituationen von Nachteil, wenn der Fahrer das rollende Fahrzeug durch "Festhalten" oder "Wegschieben" versucht zu bremsen, anstatt den Fahrschalter zu betätigen und die Antriebsrichtung umzukehren.

Bei der Erfindung ist der Deichselkopf in Zug- oder Druckrichtung an der Deichsel beweglich gelagert. Die Beweglichkeit kann in einer Kippebene vorgesehen sein oder - vorzugsweise -linear in einer Ebene, die sich durch die Achse der Deichsel erstreckt Die Relativbewegung muß naturgemäß begrenzt sein. Ihr Ausmaß wird durch einen geeigneten Wegsensor erfaßt. Es ist abhängig von dem Ausmaß der Federauslenkung. Eine direkte Wegmessung kann mit Hilfe üblicher Wegsensoren erfolgen, für die es zahlreiche bekannte Beispiele gibt.

Bei der Erfindung wird in einem Lageregler ein Regelsignal für den Antriebsmotor nach Maßgabe eines Soll-Werts erzeugt. Bei der Erfindung vergleicht der Lageregler das Wegsignal des Wegsensors mit einem Weg-Sollwert Null zur Bildung eines Soll-Werts für die Drehzahl des Antriebsmotors. Ein Drehzahlregler erzeugt aus dem Vergleich des Drehzahl-Sollwerts mit einem Drehzahl-Istwert einen Strom-Sollwert. Ein Stromregler erzeugt aus dem Vergleich des Strom-Sollwerts mit dem Strom-Istwert des Antriebsmotors das Regelsignal für den Strom des Antriebsmotors.

Die Regelung bei der Erfindung versucht, die festgestellte Auslenkung zu Null zu machen. Naturgemäß soll jedoch die Auslenkung nicht Null werden, da anderenfalls kein Regelsignal erzeugt werden würde. Daher weist die Regelung einen stationären Fehler auf, der bewirkt, daß er nicht ausgeregelt wird.

Erschütterungen und Bodenunebenheiten können am Fahrzeug auch zu einer Relativbewegung zwischen Deichselkopf und Deichsel führen und damit zu einer Auswirkung auf die Antriebsgeschwindigkeit. Es ist daher zweckmäßig eine Dämpfungseinrichtung zwischen Deichsel und Deichselkopf vorzusehen. Sie kann nach einer weiteren Ausgestaltung der Erfindung durch die mechanische Reibung bereitgestellt werden, die überwunden werden muß, bevor eine Relativbewegung von Deichsel und Kopf stattfindet. Das von der Kraft am Deichselkopf abhängige Wegsignal beschreibt mithin eine Hysterese; sämtliche Kraftschwankungen innerhalb des Hysteresebereichs führen nicht zu einer Änderung des Regelsignals.

Bei einer Ausgestaltung der Erfindung sind die relativ zueinander beweglichen Teile außerdem quer zur Zug- oder Druckebene relativ beweglich, und ein zweiter Sensor erzeugt ein zweites Wegsignal abhängig von dem Ausmaß der zweiten Relativbewegung. Dieses Wegsignal wird auf eine Lenkhilfevorrichtung gegeben zur Erzeugung eines Lenkmoments nach Maßgabe des zweiten Wegsignals. Bei Mitgehflurförderzeugen kann eine Lenkhilfe insbesondere bei großen zu transportierenden Lasten von Vorteil sein. Ein zusätzlicher Lenkmotor verschwenkt den Lenkschemel oder die Lenkwelle nach Maßgabe eines Ansteuersignals, das von der ersten Sensoranordnung oder einem zweiten Sensor gebildet wird in Abhängigkeit von den an der Deichsel wirkenden Lenkkräften. Es versteht sich, daß auch bei der zweiten Relativbewegung Vorspannfedern vorgesehen werden können, die je nach Kraftaufwand mehr oder weniger ausgelenkt werden. Die Auslenkung der Feder kann wiederum direkt oder indirekt ausgewertet werden mit Hilfe geeigneter Sensoren, wie Kraft- und/oder Weg-/Winkelaufnehmer, z.B. Potentiometer, Hallsensoren, induktive Sensoren usw.

Die beschriebene Regelung ist lastunabhängig.

Der Deichselkopf kann bei der Erfindung linear beweglich am oberen Ende der Deichselstange gelagert und in beiden Richtungen in eine Neutralstellung vorgespannt sein. Die Vorspannung erfolgt mit Hilfe von Fedem. Falls gewünscht, kann die Vorspannung in Zugrichtung von der Druckrichtung abweichen. Insbesondere kann eine Kompensation des Gewichtes des Deichselkopfes vorgenommen werden. Bei mehr oder weniger aufrechter Stellung der Deichsel erzeugt der Deichselkopf eine Kraft zwischen den beweglichen Teilen. Die Vorspannung wird so gewählt, daß diese Kraft zu keiner Auslenkung führt und somit kein Regelsignal erzeugt.

Um eine Linearbewegung zuzulassen, kann nach einer Ausgestaltung der Erfindung ein Linearlager vorgesehen werden mit einem Gleitstück, das in einer Gleitführung gelagert ist. Die Gleitführung kann so ausgebildet sein, daß sie Kräfte in der durch die Deichselachse gehenden Vertikalebene und Torsionsmomente an der Deichselstange auffängt, während quer zur Deichselachse auftretende Kräfte durch Rollenlager aufgefangen werden, die mit linearen Lagerflächen der Gleitführung zusammenwirken. Rollenlager sind vorzugsweise in den Eckbereichen eines quaderförmigen Gleitstücks vorgesehen. Die Gleitflächen verursachen naturgemäß eine gewisse Reibung. Diese kann dazu ausgenutzt werden, um einen Dämpfüngseffekt zu erzeugen, der Auswirkungen auf den Deichselkopf aufgrund von Bodenunebenheiten entgegenwirkt.

Wie erwähnt, kann der Wegsensor von bekannten Sensoranordnungen gebildet sein. Eine Ausgestaltung der Erfindung sieht hierzu vor, daß der Wegsensor von einem Stabmagneten gebildet ist, der mit einem Hallsensor zusammenwirkt.

Bei der erfindungsgemäßen Ausbildung eines Mitgehflurförderzeugs wird dem Bediener ein ähnliches Gefühl vermittelt wie bei einem deichselgelenkten Fahrzeug ohne Antrieb. Die erfindungsgemäßen Maßnahmen ermöglichen darüber hinaus, mehrere Flurförderzeuge der erfindungsgemäßen Art aneinander zu koppeln zur Bildung einer Transportkette oder eines Zuges, wobei ein Bediener das vorderste Flurförderzeug an der Deichsel "zieht" und die Antriebsvorrichtungen aller Fahrzeuge nach Maßgabe der aufgewendeten Zugkraft geregelt werden. Es findet eine gleichmäßige Bewegung der gekoppelten Fahrzeuge statt ohne ein Rucken der einzelnen Fahrzeuge, was die gleichmäßige Transportbewegung beeinträchtigen könnte. Die einzelnen Flurförderzeuge werden mit einem geeigneten Zugmittel gekoppelt, beispielsweise einer Stange, wobei das Zugmittel an der Rückseite eines Flurförderzeuges angreift und dieses mit der Deichsel bzw. dem Deichselkopf des nachfolgenden Flurförderzeugs verbindet.

Ein Ausführungsbeispiel der Erfindung wird nachfolgend anhand von Zeichnungen erläutert.
- Fig. 1: zeigt schematisch ein Ausführungsbeispiel eines Mitgehflurförderzeugs nach der Erfindung.
- Fig. 2: zeigt angedeutet ein Mitgehflurförderzeug mit einer ersten Ausführungsform einer Deichsel.
- Fig. 3: zeigt eine zweite Ausführungsform einer Deichsel eines Mitgehflurförderzeugs.
- Fig. 4: zeigt das Blockschaltbild einer Regelung für ein Flurförderzeug nach Fig. 1.
- Fig. 5: zeigt schematisch die Lagerung eines Deichselkopfes.
- Fig. 6: zeigt teilweise im Schnitt die Lagerung eines Deichselkopfes eines Flurförderzeugs nach der Erfindung.
- Fig. 7: zeigt einen Schnitt durch die Darstellung nach Fig. 6 entlang der Linie 7-7.
- Fig. 8: zeigt einen Schnitt durch die Darstellung nach Fig. 6 entlang der Linie 8-8.
- Fig. 9: zeigt vergrößert eine Einzelheit von Fig. 8.
- Fig. 10: zeigt schematisch die Federanordnung für die Lagerung nach den Figuren 6 bis 8.
- Fig. 11: zeigt schematisch einen Wegsensor für die Lagerung nach den Figuren 6 bis 8 sowie das dazugehörige Diagramm.
- Fig. 12: zeigt ein Diagramm für das Wegsignal des Wegsensors in Abhängigkeit von der auf den Deichselkopf aufgebrachten Kraft.

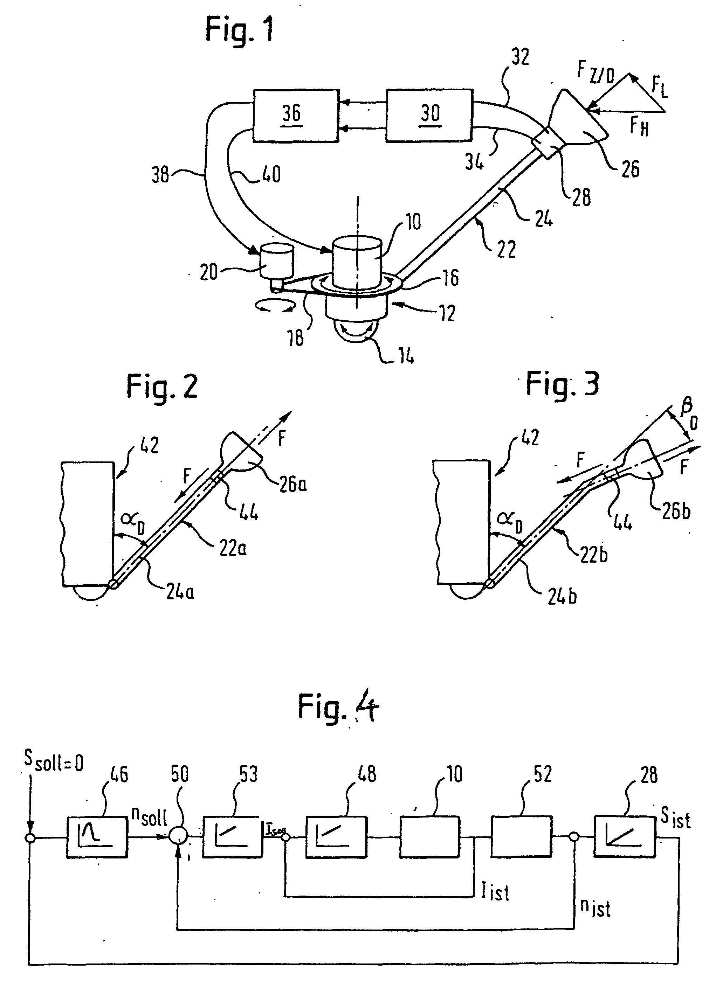

Von einem Mitgehflurförderzeug sind in Fig. 1 lediglich der Antrieb und die Deichsel dargestellt. Ein Antriebsmotor 10 sitzt auf einem Lenkschemel 12, der um eine vertikale Achse schwenkbar im nicht gezeigten Rahmen des Antriebsteils des nicht gezeigten Flurförderzeugs drehbar gelagert ist. Der Schemel 12 lagert drehbar ein Antriebsrad 14 um eine horizontale Welle. Das Antriebsrad 14 ist über ein nicht gezeigtes Getriebe vom Motor 10 antreibbar. Der Lenkschemel 12 hat ein Seil- oder Kettenrad 16, das über ein Seil oder eine Kette 18 mit einem Lenkmotor 20 zusammenwirkt. Alternativ können der Lenkmotor 20 und der Schemel 12 über eine Zahnradstufe zusammenwirken. Am Schemel 12 greift auch eine Deichsel 22 an. Die Deichsel 22 weist eine Deichselstange oder -rohr 24 auf sowie einen Deichselkopf 26. Die Deichsel 22 ist um eine horizontale Achse schwenkbar am Schemel 12 angelenkt und kann vom Bediener zwischen einer aufrechten und einer annähernd horizontalen Lage verschwenkt werden.

An der Deichsel 22 nahe dem Deichselkopf 26 ist eine Sensoranordnung 28 angebracht, welche in der Lage ist, zum einen den Zug- oder den Druckweg, der vom Bediener betätigten Deichsel 22 zu messen sowie auch die Querkomponente, welche zu einer Schwenkbewegung der Deichsel 22 bzw. des Schemels 12 führt. Der Pfeil F_{H} deutet die irgendwie im Raume liegende auf den Deichselkopf 26 aufgebrachte Kraft des Bedieners an. Sie wird zerlegt in eine Komponente F_{Z/D}, entsprechend der Zug- oder Druckkraft, die vom Bediener auf die Deichsel 12 ausgeübt wird. Die quer dazu verlaufende Komponente F_{L} ist die Lenkkraft an der Deichsel 22. Entsprechend den gemessenen Kräften werden auf eine Regelvorrichtung 30 über Leitungen 32 bzw. 34 Signale gegeben, welche die Signale in entsprechende Stellsignale für den Motor 10 bzw. Lenkmotor 20 verwandelt. Dies geschieht über eine Leistungselektronik 36, die über Leitungen 38 bzw. 40 mit dem Lenkmotor 20 bzw. dem Antriebsmotor 10 verbunden ist.

Je größer die Zug- bzw. die Druckkomponente (Wegsignal des Wegsensors) ist, um so größer ist das Moment des Antriebsmotors, damit das Flurförderzeug dem Bediener entsprechend folgen bzw. ihm voranfahren kann. Für den Lenkmotor 20 gilt dies analog. Je höher die Lenkkraft an der Deichsel 22 ist, um so höher ist Moment des Motors 20 zur Unterstützung der Lenkbewegung des Bedieners.

In den Fig. 2 und 3 ist ein Mitgehflurförderzeug 42 angedeutet mit einer Deichsel 22a bzw. 22b, die eine Deichselstange 24a, 24b und einen Deichselkopf 26a, 26b aufweist. Die Deichsel 22a unterscheidet sich von der nach Fig. 3 dadurch, daß sie gerade ist. Die Deichselstange 24b hat hingegen nahe dem Deichselkopf eine Abbiegung oder Abknickung. Der Deichselkopf 26a bzw. 26b ist bezüglich der Stange 24a bzw. 24b linear beweglich. Diese Linearbewegung wird mit Hilfe eines Wegsensors 44 erfaßt. Wenn der Bediener eine Zug- oder Druckkraft ausübt, erfolgt eine Relativverschiebung zwischen Deichselkopf 26a, 26b und Deichselstange 24a, 24b, was durch die Pfeile F angedeutet ist. Die Abknickung der Deichsel 22b gegenüber dem unteren Abschnitt der Deichsel 22b um den Winkel β_{D} hat den Vorteil, daß das Gewicht des Deichselkopfes 26b kaum Einfluß hat auf die Relativbewegung der genannten Teile, zumindest in der eingezeichneten Lage mit dem Winkel α_{D}. Man kann dies gut erkennen gegenüber der Darstellung nach Fig. 2.

In Fig. 4 ist das Regelungsschema für den Antriebsmotor 10 dargestellt. Der Wegsensor 28 (siehe Fig. 1) mißt die Auslenkung des Deichselkopfes 26 relativ zur Deichselstange 24 und erzeugt ein entsprechendes Wegsignal s_{Ist} für einen Lageregler 46, der einen Drehzahl-Soll-Wert nₛₒₗₗ für einen Drehlzahlregler 53 erzeugt. Der Drehzahlregler 53 erzeugt einen Strom-Sollwert Iₛₒₗₗ für einen Stromregler 48, der seinerseits ein Regelsignal für den Antriebsmotor 10 erzeugt. Der Drehzahl-Istwert nᵢₛₜ des Fahrzeugs 52 wird zu einem Soll-Ist-Wertvergleich 50 rückgeführt. Der Stromistwert Iᵢₛₜ wird zu einem entsprechenden Soll-Istwertvergleich zurück geführt. Mit dieser Regelung wird erreicht, daß Änderungen in der Last nicht zu unterschiedlichen Geschwindigkeiten beiglicher Deichselauslenkung führen.

Die gezeigte Regelung versucht, die Auslenkung des Deichselkopfes wieder zu Null zu machen. Der Weg-Sollwert Sₛₒₗₗ ist Null. Naturgemäß ist dies nicht erwünscht, weil anderenfalls auch das Antriebsmoment des Fahrmotors Null wäre. Im Regler 46 ist daher ein stationärer Fehler integriert, der bewirkt, daß der Regelung nicht gelingt, die angestrebte Nullage für den Deichselkopf zu verwirklichen. Der Regler 46 hat mithin Proportionalverhalten.

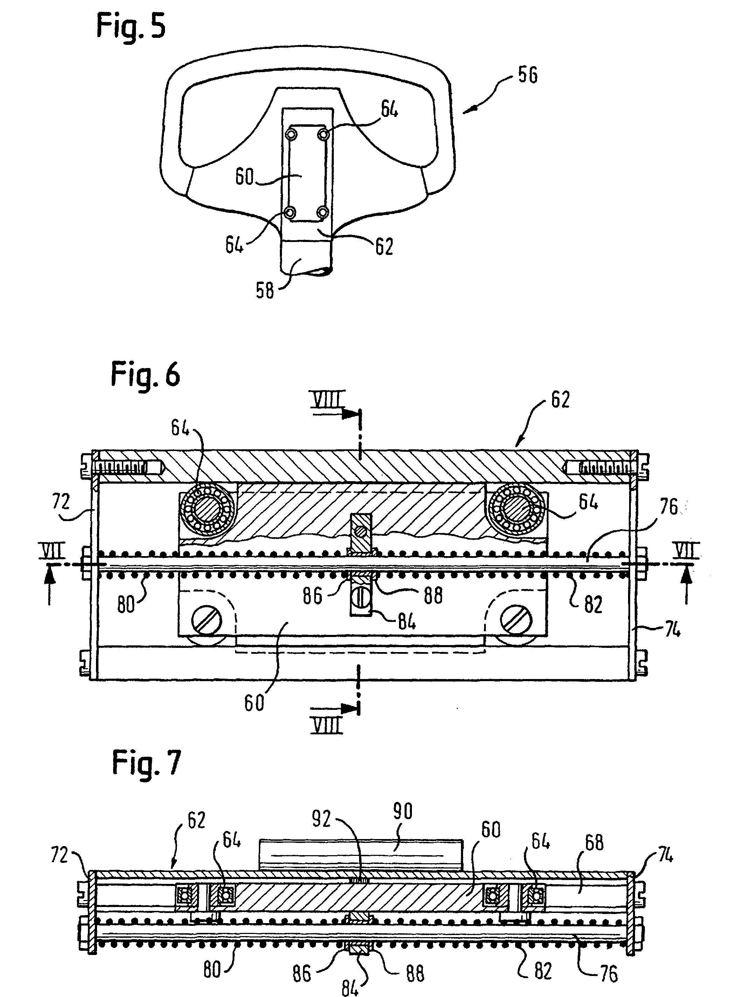

In Fig. 5 ist ein Deichselkopf 56 von an sich bekanntem Aufbau dargestellt. Er ist mit einer Deichselstange 58 verbunden, wobei jedoch eine lineare Relativbewegung möglich ist. Zu diesem Zweck ist die Deichselstange 58 mit einem Gleitstück 60 verbunden, das in einer in Fig. 5 nicht näher dargestellten Gleitführung 62 des Deichselkopfes 50 linear beweglich geführt ist. Zu diesem Zweck weist das Gleitstück 60 an den vier Eckbereichen Rollenlager 64 auf. In den Fig. 6 bis 8 ist die in Fig. 5 angedeutete Lagerung näher dargestellt.

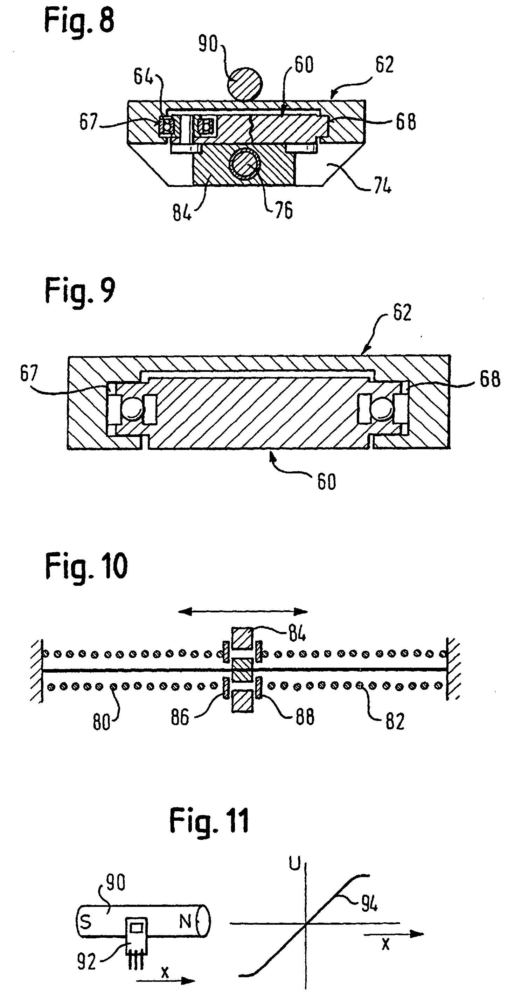

Die Gleitführung 62 ist ein im wesentlichen U-förmiges Bauteil (siehe Fig. 8 aber auch 9, wobei in Fig. 9 nur eine Hälfte des jeweiligen Rollenlagers angedeutet ist.) Die Gleitführung 62 hat an der Innenseite der Schenkel gegenüberliegende Führungsnuten 67, 68, in die entsprechend geformte Längsabschnitte des Gleitstücks 60 eingreifen. Bezüglich der Wandung der Nuten 67, 68 findet mithin eine Gleitführung statt. Die Grundflächen der Nuten 67, 68 wirken mit den Rollenlagern 66 zusammen. Wie aus den Fig. 6 bis 8 ferner hervorgeht, sind am Ende des Bauteils (Gleitführung 62) Platten 72, 74 angeschraubt, die nach unten überstehen und eine durchgehende Stange 76 halten, auf der zwei Federn 80, 82 angeordnet sind. An der Unterseite des Gleitstücks 60 ist ein Ringbauteil 84 angebracht, durch das sich die Stange 76 hindurcherstreckt. Die Federn 76, 82 stützen sich auf Scheiben 86, 88 ab, die in der in Fig. 6 und 7 gezeigten Neutralstellung sich an nicht Anschlägen auf der Stange 76 abstützen. Wird bei einer Bewegung des Gleitstücks 60 das Ringbauteil 84 mitbewegt, wird die entsprechende Feder 80 bzw. 82 unter vermehrter Spannung gesetzt, während die andere Feder in der entspannten Lage verbleibt. Beide Federn 80, 82 sind jedoch um ein gewisses Maß vorgespannt.

Das Prinzip nach den Fig. 6 bis 8 ist noch einmal in Fig. 10 vereinfacht dargestellt.

Das Bauteil 62 ist mit dem Kopf einer Deichsel , beispielsweise dem Kopf 56 nach Fig. 5 oder 26 nach Fig. 1 verbunden, während das Gleitstück 60 mit der Deichsel 58 nach Fig. 5 bzw. 24 nach Fig. 1 verbunden ist. Wird nun ein Zug oder Druck auf den Deichselkopf ausgeübt, bewegt sich das Bauteil 62 linear relativ zum Gleitstück 60. Auf dem Bauteil 62 entlang seiner Achse ist ein Stabmagnet 90 angebracht. Auf dem Gleitstück 60 ist ein Hallsensor 92 angebracht. Je nach Relativstellung zwischen Magnet 90 und Hallsensor 92 ändert sich das Ausgangssignal des Hallsensors. Die ist in Fig. 11 näher dargestellt. Bei mittiger Lage des Hallsensors 92 am Magneten 90 ist das Ausgangssignal Null. Bei einer Verschiebung zum einen Pol des Magneten 90 ergibt sich eine annähernd linear ansteigende Spannung, wie durch die Kurve 94 angedeutet. Ab einem gewissen Ausmaß der Auslenkung x tritt eine Sättigung ein.

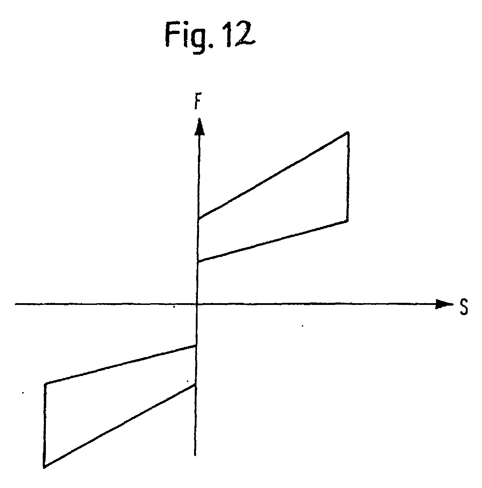

In Fig. 12 ist das Wegsignal dargestellt, das als Ist-Signal auf den Ist-Soll-Ist-Wertvergleich für den Lageregler 46 gegeben wird. Man erkennt, daß zunächst eine gewisse Kraft aufgebracht werden muß, um überhaupt zu einer Auslenkung zu kommen. Ist eine Auslenkung erfolgt, ist bei einer Änderung der Kraft nicht ein sofortiges Nachführen des Wegsignals die Folge, sondern es entsteht ein Hystereseeffekt, der zu einer Dämpfung des Ansprechverhaltens des Wegsensors führt. Somit werden schwankende Kräfte an der Deichsel, welche aufgrund von Bodenunebenheiten und ähnlichen Erscheinungen herrühren, nicht zu einer sofortigen Änderung des Wegsignals führen, zumindest nicht, wenn die Änderungen im Hysteresebereich liegen.

Die gezeigte Vorrichtung ermöglicht auf einfache Weise eine stabile linear bewegliche Lagerung des Deichselkopfes an der Deichselstange bei gleichzeitig einfacher Erfassung der Relativbewegung zwischen diesen Teilen. Die Lenkkräfte werden, wie schon erwähnt, durch die Rollenlager 66 aufgefangen. Kräfte in Biegerichtung und Torsionskräfte werden hingegen durch die Gleitlager aufgefangen.

## Patentansprüche

1. Mitgehflurförderzeug mit
- einem Antriebsmotor (10),
- einer Deichsel (22, 22a, 22b), die um eine horizontale Achse an einer Lenkwelle oder einem Lenkschemel des Flurförderzeugs angelenkt ist,
- einem Deichselkopf (26, 26a, 26b), der an dem Ende der Deichsel in einer Zug- und Druckebene gegenüber der Deichsel beweglich gelagert ist,
- einer Federanordnung zwischen Deichsel und Kopf, welche den Kopf in entgegengesetzten Richtungen in eine neutrale Stellung vorspannt,
- einem Wegsensor (28, 44), der in Abhängigkeit von der Auslenkung des Kopfes (26, 26a, 26b) aus seiner neutralen Stellung heraus ein Wegsignal (Sᵢₛₜ) erzeugt, dessen Größe dem Ausmaß der Auslenkung annähernd proportional ist, **dadurch gekennzeichnet, daß** das Mitgehflurförderfahrzeug weiterhin aufweist
- einen Lageregler (46), der aus dem Vergleich des Wegsignals (Sᵢₛₜ) mit einem Soll-Wert (S_{Soll}) einen Soll-Wert (Nₛₒₗₗ) für die Drehzahl des Antriebsmotors (10) erzeugt,
- einen Drehzahlregler (53), der aus dem Vergleich des Drehzahl-Sollwerts (Nₛₒₗₗ) mit einem Drehzahl-Istwert (Nᵢₛₜ) einen Strom-Sollwert (I_{Soll}) erzeugt und
- einen Stromregler (48), der aus dem Vergleich des Strom-Sollwerts (I_{Soll}) mit dem Strom-Istwert des Antriebsmotors (10) ein Regelsignal für den Strom des Antriebsmotors (10) erzeugt.

2. Flurförderzeug nach Anspruch 1, **dadurch gekennzeichnet, daß** eine Dämpfüngseinrichtung zwischen Deichsel und Kopf angeordnet ist.

3. Flurförderzeug nach Anspruch 2, **dadurch gekennzeichnet, daß** die Dämpfung durch die mechanische Reibung bei der Relativbewegung von Deichsel und Kopf verursacht ist.

4. Flurförderzeug nach einem der Ansprüche 1 bis 3, **dadurch gekennzeichnet, daß** der Deichselkopf (56) linear bewegbar am oberen Ende der Deichselstange (58) gelagert ist.

5. Flurförderzeug nach Anspruch 4, **dadurch gekennzeichnet, daß** ein Linearlager ein Gleitstück (60) aufweist, das in einer Gleitführung (62) gelagert ist.

6. Flurförderzeug nach Anspruch 5, **dadurch gekennzeichnet, daß** die Gleitführung (62) so ausgebildet ist, daß sie Kräfte in der durch die Deichselachse gehenden Vertikalebene und Torsionsmomente an der Deichselstange auffängt, während quer zur Deichselachse auftretende Kräfte durch Rollenlager (64) aufgefangen werden, die mit linearen Lagerflächen der Gleitführung (62) zusammenwirken.

7. Flurförderzeug nach Anspruch 6, **dadurch gekennzeichnet, daß** das im wesentlichen quaderförmige Gleitstück (60) an den Eckbereichen jeweils ein Rollenlager (64) aufweist, die mit vertikalen Lagerflächen der Gleitführung (62) zusammenwirken.

8. Flurförderzeug nach einem der Ansprüche 1 bis 7, **dadurch gekennzeichnet, daß** ein Wegsensor von einem Stabmagneten (90) und einem Hallsensor (92) gebildet ist.

9. Flurförderzeug nach einem der Ansprüche 1 bis 8, **dadurch gekennzeichnet, daß** die relativ zueinander beweglichen Teile außerdem quer zur Zug- oder Druckebene relativ beweglich sind und ein zweiter Wegsensor ein vom Ausmaß. der zweiten Relativbewegung abhängiges zweites Wegsignal erzeugt, das auf eine Lenkhilfevorrichtung (20, 18, 16) gegeben wird zur Erzeugung eines Lenkmoments nach Maßgabe des zweiten Wegsignals.

10. Flurförderzeug nach einem der Ansprüche 1 bis 9, **dadurch gekennzeichnet, daß** an der Rückseite des Flurförderzeugs oder am Deichselkopf Ankopplungsmittel für ein Zugmittel vorgesehen sind für die Bildung einer Transportkette aus mindestens zwei Flurförderzeugen.

## Claims

1. A pedestrian-operated industrial truck with a drawbar, comprising:
- a driving motor (10)
- a drawbar (22, 22a, 22b) which is hinged about a horizontal axis to a steering shaft or a body bolster of the industrial truck,
- a drawbar head (26, 26a, 26b) which is movably supported at the end of the drawbar in a tension and compression plane with respect to the drawbar,
- a spring assembly between the drawbar and head which biases the head to a neutral position in opposed directions,
- a path-detecting sensor (28, 44) which, in dependence on the excursion of the head (26, 26a, 26b) from its neutral position, generates a path signal (Sᵣₑₐₗ) the magnitude of which is approximately proportional to the extent of excursion, **characterized in that** the pedestrian-operated industrial truck further includes:
- a position controller (46) which, comparing the path signal (Sᵣₑₐₗ) to a setpoint (S_{req}), generates a setpoint (N_{req}) therefrom for the speed of the driving motor (10),
- a speed controller (53) which, comparing the speed setpoint (N_{req}) to a speed real value (Nᵣₑₐₗ), generates a setpoint (I_{req}) therefrom for the current, and
- a current controller (48) which, comparing the setpoint for the current (I_{req}) to the real value for the current of the driving motor (10), generates a control signal for the current of the driving motor (10).

2. The industrial truck as claimed in claim 1, **characterized in that** a cushioning device is interposed between the drawbar and head.

3. The industrial truck as claimed in claim 2, **characterized in that** said cushioning is caused by mechanical friction during the relative motion of the the drawbar and head.

4. The industrial truck as claimed in any one of claims 1 to 3, **characterized in that** the drawbar head (56) is supported to be linearly movable at the upper end of the drawbar rod (58).

5. The industrial truck as claimed in claim 4, **characterized in that** a linear bearing has a sliding member (60) which is supported in a sliding guide (62).

6. The industrial truck as claimed in claim 5, **characterized in that** the sliding guide (62) is configured so as to absorb forces in the vertical plane passing through the drawbar axis and torsional moments on the drawbar rod whereas forces encountered transversely to the drawbar axis are absorbed by roller bearings (64) which interact with linear bearing surfaces of the sliding guide (62).

7. The industrial truck as claimed in claim 6, **characterized in that** the substantially ashlar-shaped sliding member (60), at the comer areas, has a roller bearing (64) each which interact with vertical sliding surfaces of the sliding guide (62).

8. The industrial truck as claimed in any one of claims 1 to 7, **characterized in that** a path-detecting sensor is formed by a bar magnet (90) and a Hall sensor (92).

9. The industrial truck as claimed in any one of claims 1 to 8, **characterized in that** the components which are relatively movable to each other are also relatively movable transversely to the tension or compression plane and a second path-detecting sensor generates a second path signal dependent on the extent of the second relative motion which is provided to a steering aid device (20, 18, 16) to generate a steering moment depending on the second path signal.

10. The industrial truck as claimed in any one of claims 1 to 9, **characterized in that** means for coupling a traction means are provided at the back of the industrial truck or on the drawbar head to form a transport chain comprising at least two industrial trucks.

## Revendications

1. Chariot de manutention mobile comprenant
- un moteur d'entraînement (10),
- un timon (22, 22a, 22b) articulé autour d'un axe horizontal sur un arbre de direction ou une sellette de direction du chariot de manutention,
- une tête de timon (26, 26a, 26b) logée, de façon mobile par rapport au timon, à l'extrémité du timon dans un plan de traction et de pression mobile,
- un ensemble de ressorts entre le timon et la tête, qui précontraint la tête dans des sens opposés dans une position neutre,
- un capteur de déplacement (28, 44), qui, en fonction de la déviation de la tête (26, 26a, 26b). génère de sa position, neutre un signal de déplacement, dont la grandeur est sensiblement proportionnelle à l'amplitude de la déviation,
**caractérisé en ce que** le chariot de manutention mobile présente en outre
- un régulateur de position (46), qui génère, à partir de la comparaison du signal de déplacement (Sᵢₛₜ) avec une valeur de consigne (Sₛₒₗₗ), une valeur de consigne (Nₛₒₗₗ) pour la vitesse de rotation du moteur d'entraînement (10),
- un régulateur de vitesse de rotation (53), qui génère une valeur de consigne de courant (Iₛₒₗₗ), à partir de la comparaison de la valeur de consigne de vitesse de rotation (Nₛₒₗₗ) avec une valeur réelle de vitesse de rotation (Nᵢₛₜ), et
- un régulateur de courant (48), qui, à partir de la comparaison de la valeur de consigne de courant (Iₛₒₗₗ) avec la valeur réelle du courant du moteur d'entraînement, génère un signal de régulation pour le courant du moteur d'entraînement (10).

2. Chariot de manutention selon la revendication 1, **caractérisé en ce qu'**un dispositif amortisseur est placé entre le timon et la tête.

3. Chariot de manutention selon la revendication 2, **caractérisé en ce que** l'amortissement est provoqué par le frottement mécanique lors du mouvement relatif du timon et de la tête.

4. Chariot de manutention selon l'une des revendications 1 à 3, **caractérisé en ce que** la tête de timon (56) est logée de manière mobile linéairement au niveau de l'extrémité supérieure de la tige de timon (58).

5. Chariot de manutention selon la revendication 4, **caractérisé en ce qu'**un palier linéaire présente une pièce coulissante (60) logée dans un guidage à glissement (62).

6. Chariot de manutention selon la revendication 5, **caractérisé en ce que** le guidage à glissement (62) est conçu de façon à ce qu'il absorbe des forces dans le plan vertical traversant l'axe de timon ainsi que des couples de torsion au niveau de la tige de timon, tandis que les forces agissant perpendiculairement à l'axe de timon sont absorbées par des paliers à rouleaux (64) coopérant avec des surfaces de palier linéaires du guidage à glissement (62).

7. Chariot de manutention selon la revendication 6, **caractérisé en ce que** la pièce coulissante (60) pour l'essentiel de forme parallétépipédique présente dans les zones de coin chaque fois un palier à rouleaux (64), ces paliers coopérant avec des surfaces de palier verticales du guidage à glissement (62).

8. Chariot de manutention selon l'une des revendications 1 à 7, **caractérisé en ce qu'**un capteur de déplacement comprend un barreau magnétique (90) et un capteur à effet Hall (92).

9. Chariot de manutention selon l'une des revendications 1 à 8, **caractérisé en ce que** les éléments mobiles de manière relative les uns par rapport aux autres sont également mobiles de manière relative perpendiculairement au plan de traction ou de pression, et **en ce qu'**un deuxième capteur de déplacement génère un deuxième signal de déplacement en fonction de l'amplitude du deuxième mouvement relatif, signal qui est transmis à un dispositif de direction auxiliaire (20, 18, 16) pour générer un couple de direction en fonction du deuxième signal de déplacement.

10. Chariot de manutention selon l'une des revendications 1 à 9, **caractérisé en ce qu'**à la face arrière du chariot de manutention ou sur la tête de timon, des moyens d'accouplement pour un moyen de traction sont prévus, pour former une chaîne de transport comprenant au moins deux chariots de manutention.
